# EUROPEAN PATENT SPECIFICATION

(11) **EP 3 359 510 B1**
(45) Date of publication and mention of the grant of the patent: **26.02.2020**
(21) Application number: 16774743.5
(22) Date of filing: 15.09.2016
(51) Int. Cl.: C06B 25/06, C06B 45/10, C06B 25/34, F02K 9/08

(54) **SOLID ROCKET PROPELLANT WITH BLENDED TRIAZOLE PLASTICIZER**
FESTSTOFFRAKETENTREIBSTOFF MIT GEMISCHTEM TRIAZOL-WEICHMACHER
PROPERGOL SOLIDE CONTENANT UN PLASTIFIANT MIXTE À BASE DE TRIAZOLES

(30) Priority: 09.10.2015 US 201562239621 P
(43) Date of publication of application: 15.08.2018
(73) Proprietor: Aerojet Rocketdyne, Inc., Sacramento, CA 95813-6000 (US)
(72) Inventor: DAWLEY, Scott, Sacramento, California 95813-6000 (US)
(74) Representative: Dehns
(86) International application number: PCT/US2016/051806
(87) International publication number: WO 2017/062145

(56) References cited:
- GB-A- 2 371 297
- RU-C1- 2 465 258
- RU-C1- 2 541 332
- US-A- 6 156 136

## Description

### BACKGROUND

Solid rocket motors typically include a cast solid propellant. Solid propellant may include oxidizer, fuel, or both, held together with a binder. Ignition of the solid propellant generates high pressure gas, which is expelled through a nozzle to generate thrust.

### SUMMARY

A solid rocket propellant according to an example of the present disclosure includes a blended plasticizer of at least two chemically different 3-nitro 1,2,4-triazoles, wherein the two chemically different 3-nitro 1,2,4-triazoles are independently selected from azidoethyl nitro-triazole, azidopropyl nitro-triazole, nitradoethyl nitro-triazole, and nitradopropyl nitro-triazole.

In a further embodiment of any of the foregoing embodiments, the blended plasticizer has a molar ratio from 1.1:0.9 to 0.9:1.1 of the two chemically different 3-nitro 1,2,4-triazoles.

In a further embodiment of any of the foregoing embodiments, the two chemically different 3-nitro 1,2,4-triazoles are azidopropyl nitro-triazole and azidoethyl nitro-triazole.

In a further embodiment of any of the foregoing embodiments, the two chemically different 3-nitro 1,2,4-triazoles are 1-azidoethyl 3-nitro 1,2,4-triazole and 1-azidopropyl 3-nitro 1,2,4-triazole.

In a further embodiment of any of the foregoing embodiments, the blended plasticizer has a density from 1.51 grams per cubic centimeter to 1.63 grams per cubic centimeter.

In a further embodiment of any of the foregoing embodiments, the blended plasticizer has a glass transition temperature of -62°C to -75°C.

In a further embodiment of any of the foregoing embodiments, the blended plasticizer has a thermal stability characterized by no weight loss up to 125°C and 0.4% weight loss or less after 16 hours at 70°C.

A further embodiment of any of the foregoing embodiments includes a polymeric binder, wherein the polymeric binder and blended plasticizer have a total combined weight, and from 25% to 75% of the total combined weight is the blended plasticizer.

A solid rocket motor according to an example of the present disclosure includes a motor case, a nozzle attached with the motor case, and a solid rocket propellant disposed in the motor case. The solid rocket propellant has a blended plasticizer of at least two chemically different 3-nitro 1,2,4-triazoles that are independently selected from the group consisting of azidoethyl nitro-triazole, azidopropyl nitro-triazole, nitradoethyl nitro-triazole, and nitradopropyl nitro-triazole.

In a further embodiment of any of the foregoing embodiments, the blended plasticizer has a molar ratio from 1.1:0.9 to 0.9:1.1 of the two chemically different 3-nitro 1,2,4-triazoles.

In a further embodiment of any of the foregoing embodiments, the two chemically different 3-nitro 1,2,4-triazoles are azidopropyl nitro-triazole and azidoethyl nitro-triazole.

In a further embodiment of any of the foregoing embodiments, the two chemically different 3-nitro 1,2,4 triazoles are 1-azidoethyl 3-nitro 1,2,4-triazole and 1-azidopropyl 3-nitro 1,2,4-triazole.

In a further embodiment of any of the foregoing embodiments, the blended plasticizer has a density from 1.51 grams per cubic centimeter to 1.63 grams per cubic centimeter, a glass transition temperature of -62°C to -75°C, and a thermal stability characterized by no weight loss up to 125°C and 0.4% weight loss or less after 16 hours at 70°C.

A further embodiment of any of the foregoing embodiments includes a polymeric binder, wherein the polymeric binder and blended plasticizer have a total combined weight, and from 25% to 75% of the total combined weight is the blended plasticizer.

A solid rocket propellant according to an example of the present disclosure includes a blended triazole plasticizer with a density from 1.51 grams per cubic centimeter to 1.63 grams per cubic centimeter, and a glass transition temperature of -62°C to -75°C.

In a further embodiment of any of the foregoing embodiments, the blended triazole plasticizer includes azidopropyl nitro-triazole and azidoethyl nitro-triazole in a molar ratio from 1.1:0.9 to 0.9:1.1.

### BRIEF DESCRIPTION OF THE DRAWINGS

The various features and advantages of the present disclosure will become apparent to those skilled in the art from the following detailed description. The drawings that accompany the detailed description can be briefly described as follows.

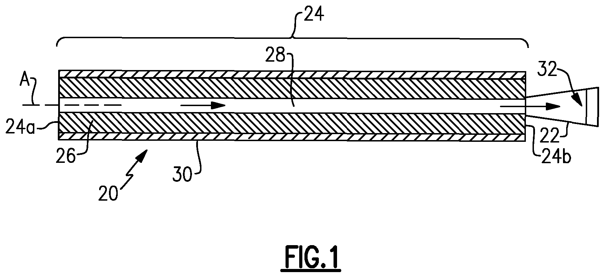

Figure 1 illustrates an example solid rocket motor.

### DETAILED DESCRIPTION

Figure 1 schematically illustrates a cross-section of selected portions of an example solid rocket motor 20, which is also an example of an energetic device. The solid rocket motor 20 generally includes a nozzle 22 and a solid propellant section 24. The solid propellant section 24 includes a forward end 24a and an aft end 24b. The nozzle 22 is attached at the aft end 24b. As will be appreciated, the solid rocket motor 20 may include additional components related to the operation thereof, which are generally known and thus not described herein.

The solid propellant section 24 includes a solid propellant 26. Solid propellants may include at least a polymer-based binder and an oxidizer. Depending on the requirements of a particular design, a solid propellant may also include a solid fuel. In this example, the solid propellant 26 defines an elongated bore 28. The geometry of the bore 28 may be cylindrical and may have radial fin slots or other features. Alternatively, the solid propellant 26 may not have a bore. The solid propellant 26 is disposed within a motor case 30 about a central axis A.

Upon ignition the solid propellant 26 reacts to produce high temperature and high pressure gas (combustion gas). The combustion gas flows down the bore 28 and discharges through the nozzle 22 to produce thrust.

Prior to use for producing thrust, the motor 20 may be in storage or may be transported. During storage or transport a motor may be subject to the ambient surrounding environmental conditions, stresses, shock, and the like. In particular, a solid propellant must be insensitive to detonation during transport and while in storage. In this regard, as will be discussed in further detail below, the solid propellant 26 includes a blended triazole plasticizer as defined in claim 1 that has good energetic performance and enhanced insensitivity. The blended triazole plasticizer is energetic and may be used instead of another energetic or non-energetic plasticizer, such as nitroglycerin or butane triol trinitrate

The solid propellant 26 includes a blended plasticizer of at least two chemically different 3-nitro 1,2,4-triazoles as defined in claim 1. As will be appreciated, the solid propellant may include additional constituents. For instance, the solid propellant 26 may include the blended plasticizer with a polymeric binder and an oxidizer. Depending on the design of the motor 20, the solid propellant 26 may also include a solid fuel, such as one or more powders of aluminum, boron, or magnesium.

Each of the two chemically different 3-nitro 1,2,4-triazoles are independently selected from azidoethyl nitro-triazole, azidopropyl nitro-triazole, nitradoethyl nitro-triazole, and nitradopropyl nitro-triazole. In a further example, the 3-nitro 1,2,4-triazoles are independently selected from 1-azidopropyl 3-nitro 1,2,4-triazole (Structure I "APN"), 1-azidoethyl 3-nitro 1,2,4-triazole (Structure 2 "AEN"), 1-nitradoethyl 3-nitro 1,2,4-triazole (Structure 3 "NEN"), and 1-nitradopropyl 3-nitro 1,2,4-triazole (Structure 4 "NPN"). In further examples, for high density and thermal stability, the two chemically different 3-nitro 1,2,4-triazoles are azidopropyl nitro-triazole and azidoethyl nitro-triazole. An example of azidoethyl nitro-triazole is 1-azidoethyl 3-nitro 1,2,4-triazole, and an example of azidopropyl nitro-triazole is 1-azidopropyl 3-nitro 1,2,4-triazole.

### Structure 1 APN: 1-azidopropyl 3-nitro 1,2,4-triazole

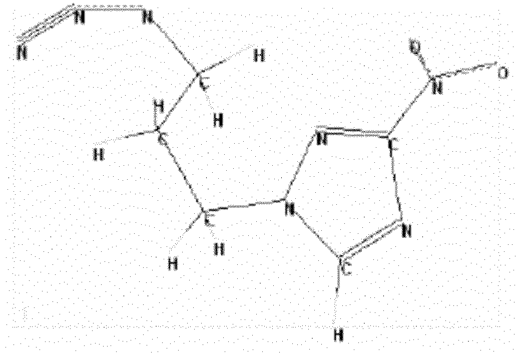

### Structure 2 AEN: 1-azidoethyl 3-nitro 1,2,4-triazole

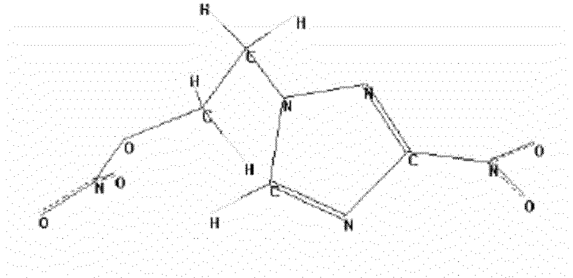

### Structure 3 NEN: 1-nitradoethyl 3-nitro 1,2,4-triazole

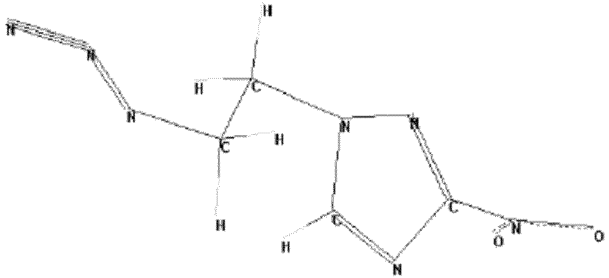

### Structure 4 NPN: 1-nitradopropyl 3-nitro 1,2,4-triazole

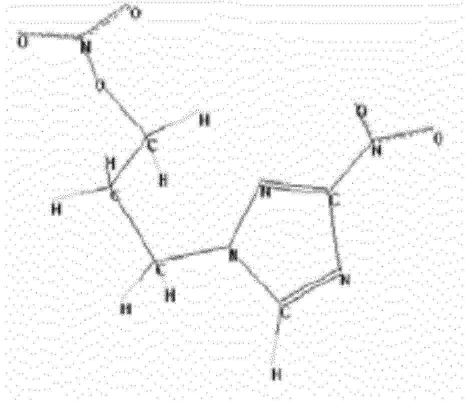

The amount of the blended plasticizer in the solid propellant 26 can be varied to vary insensitivity and energetic performance. For instance, the polymeric binder and blended plasticizer of the solid propellant 26 have a total combined weight, and from 25% to 75% of the total combined weight is the blended plasticizer. The relative amounts of each of the 3-nitro 1,2,4-triazoles can also be varied to vary density, thermal stability, and glass transition temperature. As an example, the blended plasticizer has a molar ratio from 1.1:0.9 to 0.9:1.1 of the two chemically different 3-nitro 1,2,4-triazoles. In a further example, the molar ratio is about 1:1.

The blended plasticizer as defined in claim 1 may also be characterized by density and glass transition temperature. For example, the blended plasticizer may have a density from 1.51 grams per cubic centimeter to 1.63 grams per cubic centimeter and a glass transition temperature of -62°C to -75°C. In one further example, the density is approximately 1.52 grams per cubic centimeter and the glass transition temperature is approximately -62°C. The blended plasticizer may also have a thermal stability characterized by no weight loss up to 125°C and 0.4% weight loss or less after 16 hours at 70°C. Further examples of blends and density are shown in Table 1 below.

**Table 1: Blended Plasticizer Densities**

| Blend (1:1) | Density (g/cc) |
|---|---|
| APN/AEN | 1.52 |
| NPN/NEN | 1.61 |
| APN/NPN | 1.53 |

The motor 20 may be fabricated by injecting or casting the solid propellant 26 in the case 30. For instance, the constituents of the solid propellant 26 are mixed together and then injected or poured into the case or an appropriate mold. The mixture then cures, thus producing the final solid propellant 26 in the desired geometry. As an example, the solid propellant 26 may include the blended plasticizer, polymeric binder, an oxidizer, and optionally a solid fuel. Typically, these constituents will be mixed together with a curative. The curative may be added last to the mixture to prevent premature curing. The mixture is then poured into the case 30 or an appropriate mold to form the solid propellant 26. The curative reacts with the binder to form crosslinks, which serve to make the binder elastic. Most typically, the blended plasticizer is physically mixed with the binder, but is not chemically bound to the binder.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

## Claims

1. A solid rocket propellant comprising a blended plasticizer of at least two chemically different 3-nitro 1,2,4-triazoles wherein the two chemically different 3-nitro 1,2,4-triazoles are independently selected from the group consisting of azidoethyl nitro-triazole, azidopropyl nitro-triazole, nitradoethyl nitro-triazole, and nitradopropyl nitro-triazole.

2. The solid rocket propellant as recited in claim 1, wherein the blended plasticizer has a molar ratio from 1.1:0.9 to 0.9:1.1 of the two chemically different 3-nitro 1,2,4-triazoles.

3. The solid rocket propellant as recited in claim 1, wherein the two chemically different 3-nitro 1,2,4-triazoles are azidopropyl nitro-triazole and azidoethyl nitro-triazole.

4. The solid rocket propellant as recited in claim 1, wherein the two chemically different 3-nitro 1,2,4-triazoles are 1-azidoethyl 3-nitro 1,2,4-triazole and 1-azidopropyl 3-nitro 1,2,4-triazole.

5. The solid rocket propellant as recited in claim 1, wherein the blended plasticizer has a density from 1.51 grams per cubic centimeter to 1.63 grams per cubic centimeter.

6. The solid rocket propellant as recited in claim 5, wherein the blended plasticizer has a glass transition temperature of -62°C to -75°C.

7. The solid rocket propellant as recited in claim 1, wherein the blended plasticizer has a thermal stability **characterized by** no weight loss up to 125°C and 0.4% weight loss or less after 16 hours at 70°C.

8. The solid rocket propellant as recited in claim 1, further comprising a polymeric binder, wherein the polymeric binder and blended plasticizer have a total combined weight, and from 25% to 75% of the total combined weight is the blended plasticizer.

9. A solid rocket motor comprising:
a motor case;
a nozzle attached with the motor case; and
a solid rocket propellant disposed in the motor case, the solid rocket propellant including a blended plasticizer of at least two chemically different 3-nitro 1,2,4-triazoles wherein the two chemically different 3-nitro 1,2,4-triazoles are independently selected from the group consisting of azidoethyl nitro-triazole, azidopropyl nitro-triazole, nitradoethyl nitro-triazole, and nitradopropyl nitro-triazole..

10. The solid rocket motor as recited in claim 9, wherein the blended plasticizer has a molar ratio from 1.1:0.9 to 0.9:1.1 of the two chemically different 3-nitro 1,2,4-triazoles.

11. The solid rocket motor as recited in claim 9, wherein the two chemically different 3-nitro 1,2,4-triazoles are azidopropyl nitro-triazole and azidoethyl nitro-triazole.

12. The solid rocket motor as recited in claim 9, wherein the two chemically different 3-nitro 1,2,4 triazoles are 1-azidoethyl 3-nitro 1,2,4-triazole and 1-azidopropyl 3-nitro 1,2,4-triazole.

13. The solid rocket motor as recited in claim 9, wherein the blended plasticizer has a density from 1.51 grams per cubic centimeter to 1.63 grams per cubic centimeter, a glass transition temperature of -62°C to -75°C, and a thermal stability **characterized by** no weight loss up to 125°C and 0.4% weight loss or less after 16 hours at 70°C, or the solid rocket motor as recited in claim 9, further comprising a polymeric binder, wherein the polymeric binder and blended plasticizer have a total combined weight, and from 25% to 75% of the total combined weight is the blended plasticizer.

14. The solid rocket propellant of claim 1 wherein the blended triazole plasticizer has a density from 1.51 grams per cubic centimeter to 1.63 grams per cubic centimeter, and a glass transition temperature of -62°C to -75°C.

15. The solid rocket motor as recited in claim 14, wherein the blended triazole plasticizer includes azidopropyl nitro-triazole and azidoethyl nitro-triazole in a molar ratio from 1:0.9 to 0.9:1.1.

## Patentansprüche

1. Feststoffraketentreibstoff, umfassend einen gemischten Weichmacher aus mindestens zwei chemisch unterschiedlichen 3-Nitro-1,2,4-triazolen, wobei die zwei chemisch unterschiedlichen 3-Nitro-1,2,4-triazole unabhängig ausgewählt sind aus der Gruppe, bestehend aus Azidoethylnitrotriazol, Azidopropylnitrotriazol, Nitradoethylnitrotriazol und Nitradopropylnitrotriazol.

2. Feststoffraketentreibstoff nach Anspruch 1, wobei der gemischte Weichmacher ein Molverhältnis von 1,1:0,9 bis 0,9:1,1 der zwei chemisch unterschiedlichen 3-Nitro-1,2,4-triazole aufweist.

3. Feststoffraketentreibstoff nach Anspruch 1, wobei die zwei chemisch unterschiedlichen 3-Nitro-1,2,4-triazole Azidopropylnitrotriazol und Azidoethylnitrotriazol sind.

4. Feststoffraketentreibstoff nach Anspruch 1, wobei die zwei chemisch unterschiedlichen 3-Nitro-1,2,4-triazole 1-Azidoethyl-3-nitro-1,2,4-triazol und 1-Azidopropyl-3-nitro-1,2,4-triazol sind.

5. Feststoffraketentreibstoff nach Anspruch 1, wobei der gemischte Weichmacher eine Dichte von 1,51 Gramm pro Kubikzentimeter bis 1,63 Gramm pro Kubikzentimeter aufweist.

6. Feststoffraketentreibstoff nach Anspruch 5, wobei der gemischte Weichmacher eine Glasübergangstemperatur von -62 °C bis -75 °C aufweist.

7. Feststoffraketentreibstoff nach Anspruch 1, wobei der gemischte Weichmacher eine Wärmestabilität aufweist, die durch keinen Gewichtsverlust bis zu 125 °C und 0,4 % Gewichtsverlust oder weniger nach 16 Stunden bei 70 °C gekennzeichnet ist.

8. Feststoffraketentreibstoff nach Anspruch 1, weiter umfassend ein Polymerbindemittel, wobei das Polymerbindemittel und der gemischte Weichmacher ein kombiniertes Gesamtgewicht aufweisen und 25 % bis 75 % des kombinierten Gesamtgewichts der gemischte Weichmacher ausmacht.

9. Feststoffraketenmotor, umfassend:
ein Motorgehäuse;
eine an dem Motorgehäuse befestigte Düse; und
einen in dem Motorgehäuse angeordneten Feststoffraketentreibstoff, wobei der Feststoffraketentreibstoff einen gemischten Weichmacher aus mindestens zwei chemisch unterschiedlichen 3-Nitro-1,2,4-triazolen beinhaltet, wobei die zwei chemisch unterschiedlichen 3-Nitro-1,2,4-triazole unabhängig ausgewählt sind aus der Gruppe, bestehend aus Azidoethylnitrotriazol, Azidopropylnitrotriazol, Nitradoethylnitrotriazol und Nitradopropylnitrotriazol.

10. Feststoffraketenmotor nach Anspruch 9, wobei der gemischte Weichmacher ein Molverhältnis von 1,1:0,9 bis 0,9:1,1 der zwei chemisch unterschiedlichen 3-Nitro-1,2,4-triazole aufweist.

11. Feststoffraketenmotor nach Anspruch 9, wobei die zwei chemisch unterschiedlichen 3-Nitro-1,2,4-triazole Azidopropylnitrotriazol und Azidoethylnitrotriazol sind.

12. Feststoffraketenmotor nach Anspruch 9, wobei die zwei chemisch unterschiedlichen 3-Nitro-1,2,4-triazole 1-Azidoethyl-3-nitro-1,2,4-triazol und 1-Azidopropyl-3-nitro-1,2,4-triazol sind.

13. Feststoffraketenmotor nach Anspruch 9, wobei der gemischte Weichmacher eine Dichte von 1,51 Gramm pro Kubikzentimeter bis 1,63 Gramm pro Kubikzentimeter, eine Glasübergangstemperatur von -62 °C bis -75 °C und eine Wärmestabilität, die durch keinen Gewichtsverlust bis zu 125 °C und 0,4% Gewichtsverlust oder weniger nach 16 Stunden bei 70 °C gekennzeichnet ist, aufweist, oder Feststoffraketenmotor nach Anspruch 9, weiter umfassend ein Polymerbindemittel, wobei das Polymerbindemittel und der gemischte Weichmacher ein kombiniertes Gesamtgewicht aufweisen und 25 % bis 75 % des kombinierten Gesamtgewichts der gemischte Weichmacher ausmacht.

14. Feststoffraketentreibstoff nach Anspruch 1, wobei der gemischte Triazol-Weichmacher eine Dichte von 1,51 Gramm pro Kubikzentimeter bis 1,63 Gramm pro Kubikzentimeter und eine Glasübergangstemperatur von -62 °C bis -75 °C aufweist.

15. Feststoffraketenmotor nach Anspruch 14, wobei der gemischte Triazol-Weichmacher Azidopropylnitrotriazol und Azidoethylnitrotriazol in einem Molverhältnis von 1,1:0,9 bis 0,9:1,1 beinhaltet.

## Revendications

1. Propergol solide comprenant un plastifiant mélangé d'au moins deux 3-nitro 1,2,4-triazoles chimiquement différents dans lequel les deux 3-nitro 1,2,4-triazoles chimiquement différents sont sélectionnés indépendamment dans le groupe consistant en l'azidoéthyle nitro-triazole, l'azidopropyle nitro-triazole, le nitradoéthyle nitro-triazole, et le nitradopropyle nitro-triazole.

2. Propergol solide selon la revendication 1, dans lequel le plastifiant mélangé présente un rapport molaire de 1,1:0,9 à 0,9:1,1 des deux 3-nitro 1,2,4-triazoles chimiquement différents.

3. Propergol solide selon la revendication 1, dans lequel les deux 3-nitro 1,2,4-triazoles chimiquement différents sont l'azidopropyle nitro-triazole et l'azidoéthyle nitro-triazole.

4. Propergol solide selon la revendication 1, dans lequel les deux 3-nitro 1,2,4-triazoles chimiquement différents sont le 1-azidoéthyle 3-nitro 1,2,4-triazole et le 1-azidopropyle 3-nitro 1,2,4-triazole.

5. Propergol solide selon la revendication 1, dans lequel le plastifiant mélangé présente une densité de 1,51 gramme par centimètre cube à 1,63 gramme par centimètre cube.

6. Propergol solide selon la revendication 5, dans lequel le plastifiant mélangé présente une température de transition vitreuse de -62 °C à -75 °C.

7. Propergol solide selon la revendication 1, dans lequel le plastifiant mélangé présente une stabilité thermique **caractérisée par** aucune perte de poids jusqu'à 125 °C et 0,4 % de perte de poids ou moins après 16 heures à 70 °C.

8. Propergol solide selon la revendication 1, comprenant en outre un liant polymérique, dans lequel le liant polymérique et le plastifiant mélangé présentent un poids combiné total, et de 25 % à 75 % du poids combiné total est le plastifiant mélangé.

9. Moteur-fusée à propergol solide comprenant :
un boîtier de moteur ;
une buse attachée au boîtier de moteur ; et
un propergol solide disposé dans le boîtier de moteur, le propergol solide incluant un plastifiant mélangé d'au moins deux 3-nitro 1,2,4-triazoles chimiquement différents dans lequel les deux 3-nitro 1,2,4-triazoles chimiquement différents sont sélectionnés indépendamment dans le groupe consistant en l'azidoéthyle nitro-triazole, l'azidopropyle nitro-triazole, le nitradoéthyle nitro-triazole, et le nitradopropyle nitro-triazole.

10. Moteur-fusée à propergol solide selon la revendication 9, dans lequel le plastifiant mélangé présente un rapport molaire de 1,1:0,9 à 0,9:1,1 des deux 3-nitro 1,2,4-triazoles chimiquement différents.

11. Moteur-fusée à propergol solide selon la revendication 9, dans lequel les deux 3-nitro 1,2,4-triazoles chimiquement différents sont l'azidopropyle nitro-triazole et l'azidoéthyle nitro-triazole.

12. Moteur-fusée à propergol solide selon la revendication 9, dans lequel les deux 3-nitro 1,2,4-triazoles chimiquement différents sont le 1-azidoéthyle 3-nitro 1,2,4-triazole et le 1-azidopropyle 3-nitro 1,2,4-triazole.

13. Moteur-fusée à propergol solide selon la revendication 9, dans lequel le plastifiant mélangé présente une densité de 1,51 gramme par centimètre cube à 1,63 gramme par centimètre cube, une température de transition vitreuse de -62 °C à -75 °C, et une stabilité thermique **caractérisée par** aucune perte de poids jusqu'à 125 °C et 0,4 % de perte de poids ou moins après 16 heures à70°C, ou moteur-fusée à propergol solide selon la revendication 9, comprenant en outre un liant polymérique, dans lequel le liant polymérique et le plastifiant mélangé présentent un poids combiné total, et de 25 % à 75 % du poids combiné total est le plastifiant mélangé.

14. Propergol solide selon la revendication 1, dans lequel le plastifiant triazole mélangé présente une densité de 1,51 gramme par centimètre cube à 1,63 gramme par centimètre cube, et une température de transition vitreuse de -62 °C à -75 °C.

15. Moteur-fusée à propergol solide selon la revendication 14, dans lequel le plastifiant triazole mélangé inclut de l'azidopropyle nitro-triazole et de l'azidoéthyle nitro-triazole dans un rapport molaire de 1,1:0,9 à 0,9:1,1.
